# EUROPEAN PATENT APPLICATION

(11) **EP 4 514 051 A1**
(43) Date of publication of application: **26.02.2025**
(21) Application number: 23790989.0
(22) Date of filing: 27.03.2023
(51) Int. Cl.: H04W 76/11

(54) **INFORMATION PROCESSING METHOD, APPARATUS, TERMINAL, AND STORAGE MEDIUM**

(30) Priority: 22.04.2022 CN 202210429709
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2023/084178
(87) International publication number: WO 2023/202329

(57) **Abstract**

The present disclosure provides an information processing method, an apparatus, a terminal and a storage medium. A relay terminal or a remote terminal acquires first identification information used by a first remote terminal and a second remote terminal at a direct communication interface; determines a mapping relationship between the first identification information and second identification information; sends the mapping relationship to the first remote terminal and/or the second remote terminal. Through this scheme, as the number of bits of the second identification information is less than that of the first identification information, in a process of end-to-end communication, when the second identification information is carried in an adaptation layer, a head overhead of the adaptation layer can be saved, thereby improving a resource utilization rate when the remote terminal performs data transmission through the relay terminal and ensuring an end-to-end data transmission efficiency.

## Description

The present disclosure claims priority to Chinese Patent Application No. 202210429709.8, titled "INFORMATION PROCESSING METHOD, APPARATUS, TERMINAL AND STORAGE MEDIUM", filed to China National Intellectual Property Administration on April 22, 2022, which is hereby incorporated by reference in its entirety.

### TECHNICAL FIELD

The present disclosure relates to the technical field of communication and, in particular, to an information processing method, an apparatus, a terminal and a storage medium.

### BACKGROUND

In order to expand the network coverage in the 5G NR (New Radio, New Radio) system, a relay from a terminal to a network device (UE-to-Network Relay, U2N Relay) and a relay from a terminal to a terminal (UE-to-UE Relay, U2U Relay) are introduced. For the U2N Relay, a remote terminal can access a network device through the U2N relay; and for the U2U Relay, the remote terminal can access a target terminal through the U2U Relay.

In the related technology, when the remote terminal performs an end-to-end communication through a relay terminal, identification information of a bearer interface needs to be configured by an adaptation layer of the relay terminal. However, these identification information will lead to a large header overhead of the adaptation layer, resulting in a low resource utilization rate in the end-to-end communication process.

### SUMMARY

The present application provides an information processing method, an apparatus, a terminal and a storage medium, which are used for reducing a header overhead of an adaptation layer and ensuring a data transmission efficiency of an end-to-end communication.

In a first aspect, an embodiment of the present disclosure provides an information processing method, which is applied to a relay terminal, the information processing method includes: acquiring first identification information used by a first remote terminal and a second remote terminal at a direct communication interface, where the first remote terminal and the second remote terminal are in end-to-end communication connection through the relay terminal; determining a mapping relationship between the first identification information and second identification information; and sending the mapping relationship to the first remote terminal and/or the second remote terminal; where the first identification information includes a source address and a target address used by the direct communication interface, or the first identification information includes the source address, the target address and a transmission type, and the number of bits of the second identification information is less than that of the first identification information.

In some optional implementations, the acquiring the first identification information used by the first remote terminal and the second remote terminal at the direct communication interface includes: receiving the first identification information sent by the first remote terminal and/or the second remote terminal; or acquiring, by a lower layer of the relay terminal, the first identification information from an upper layer of the relay terminal.

In some optional implementations, the receiving the first identification information sent by the first remote terminal and/or the second remote terminal includes: receiving the first identification information sent by the first remote terminal through a first PC5-RRC signaling; and/or receiving the first identification information sent by the second remote terminal through a second PC5-RRC signaling.

In some optional implementations, the acquiring, by the lower layer of the relay terminal, the first identification information from the upper layer of the relay terminal includes: acquiring, by the upper layer of the relay terminal, the first identification information through a PC5-S signaling process, and sending first indication information carrying the first identification information to the lower layer of the relay terminal, so that the lower layer of the relay terminal acquires the first identification information through the first indication information.

In some optional implementations, the information processing method further includes: receiving second indication information sent by the first remote terminal and/or the second remote terminal, and determining the mapping relationship between the first identification information and the second identification information according to the second indication information; or determining the mapping relationship between the first identification information and the second identification information according to the first identification information and currently available second identification information of the relay terminal.

In some optional implementations, he determining the mapping relationship between the first identification information and the second identification information according to the first identification information and the currently available second identification information of the relay terminal includes: determining currently unoccupied candidate second identification information as the currently available second identification information of the relay terminal; and for the first identification information, selecting the second identification information from the currently available second identification information of the relay terminal; and determining the mapping relationship between the first identification information and the second identification information according to the second identification information.

In some optional implementations, the sending the mapping relationship between the first identification information and the second identification information to the first remote terminal and/or the second remote terminal includes: sending the mapping relationship to the first remote terminal through a first PC5-RRC signaling between the relay terminal and the first remote terminal; and/or sending the mapping relationship to the second remote terminal through a second PC5-RRC signaling between the relay terminal and the second remote terminal.

In some optional implementations, when the relay terminal performs data transmission with the first remote terminal through the direct communication interface, the second identification information is carried in a PDU header of an adaptation layer; and/or when the relay terminal performs data transmission with the second remote terminal through the direct communication interface, the second identification information is carried in the PDU header of the adaptation layer..

In some optional implementations, the PDU header of the adaptation layer further includes at least one of the following: bearer identification information through an end-to-end direct communication interface between the first remote terminal and the second remote terminal; or a logical channel identification LCID through the end-to-end direct communication interface between the first remote terminal and the second remote terminal.

In a second aspect, an embodiment of the present disclosure provides an information processing method, applied to a first remote terminal or a second remote terminal, where the first remote terminal is in end-to-end communication connection with the second remote terminal through a relay terminal, the information processing method includes: acquiring a mapping relationship between first identification information and second identification information; determining a PDU header format of an adaptation layer according to the mapping relationship; where the first identification information includes a source address and a target address used by a direct communication interface, or the first identification information includes the source address, the target address and a transmission type, and the number of bits of the second identification information is less than that of the first identification information.

In some optional implementations, the acquiring the mapping relationship between the first identification information and the second identification information includes: receiving the mapping relationship sent by the relay terminal; or determining the mapping relationship according to the first identification information and the second identification information.

In some optional implementations, the receiving the mapping relationship sent by the relay terminal includes: acquiring the first identification information; sending second indication information and the first identification information to the relay terminal through a first PC5-RRC signaling between the first remote terminal and the relay terminal, and receiving the mapping relationship sent by the relay terminal through the first PC5-RRC signaling; and/or sending the second indication information and the first identification information to the relay terminal through a second PC5-RRC signaling between the second remote terminal and the relay terminal, and receiving the mapping relationship sent by the relay terminal through the second PC5-RRC signaling.

In some optional implementations, the determining the mapping relationship according to the first identification information and the second identification information includes: acquiring the first identification information; and determining currently unoccupied candidate second identification information as currently available second identification information of the relay terminal; and for the first identification information, selecting the second identification information from the currently available second identification information of the relay terminal; determining the mapping relationship between the first identification information and the second identification information the second identification information.

In some optional implementations, the acquiring the first identification information includes: acquiring, by an upper layer of the first remote terminal, the first identification information through a PC5-S signaling process, and sending third indication information carrying the first identification information to a lower layer of the first remote terminal, so that the lower layer of the first remote terminal acquires the first identification information through the third indication information; or acquiring the first identification information through an end-to-end PC5-RRC signaling interaction process performed by the lower layer of the first remote terminal.

In some optional implementations, the information processing method further includes at least one of the following operations: sending, by the first remote terminal, the mapping relationship to the relay terminal through a first PC5-RRC signaling; or sending, by the second remote terminal, the mapping relationship to the relay terminal through a second PC5-RRC signaling; or sending, by the first remote terminal, the mapping relationship to the second remote terminal through an end-to-end third PC5-RRC signaling between the first remote terminal and the second remote terminal; or sending, by the second remote terminal, the mapping relationship to the first remote terminal through the third PC5-RRC signaling.

In some optional implementations, when the first remote terminal and the second remote terminal perform data transmission through the direct communication interface, the second identification information is carried in a PDU header of an adaptation layer; and/or when the remote terminal performs data transmission with the relay terminal through the direct communication interface, the second identification information is carried in the PDU header of the adaptation layer.

In some optional implementations, the PDU header of the adaptation layer further includes at least one of the following: bearer identification information of an end-to-end direct communication interface between the first remote terminal and the second remote terminal; or a logical channel identification LCID of the end-to-end direct communication interface between the first remote terminal and the second remote terminal.

In a third aspect, an embodiment of the present disclosure provides a relay terminal, including: an acquisition module, configured to acquire first identification information used by a first remote terminal and a second remote terminal at a direct communication interface, where the first remote terminal and the second remote terminal are in end-to-end communication connection through the relay terminal; a determining module, configured to determine a mapping relationship between the first identification information and second identification information; and a sending module, configured to send the mapping relationship to the first remote terminal and/or the second remote terminal; where the first identification information includes a source address and a target address used by the direct communication interface, or the first identification information includes the source address, the target address and a transmission type, and the number of bits of the second identification information is less than that of the first identification information.

In some optional implementations, the acquisition module is specifically configured to: receive the first identification information sent by the first remote terminal and/or the second remote terminal; or acquire, by a lower layer of the relay terminal, the first identification information from an upper layer of the relay terminal.

In some optional implementations, the acquisition module is specifically configured to: receive the first identification information sent by the first remote terminal through a first PC5-RRC signaling; and/or receive the first identification information sent by the second remote terminal through a second PC5-RRC signaling.

In some optional implementations, the acquisition module is specifically configured for the upper layer of the relay terminal to acquire the first identification information through a PC5-S signaling process, and send first indication information carrying the first identification information to the lower layer of the relay terminal, so that the lower layer of the relay terminal acquires the first identification information through the first indication information.

In some optional implementations, the acquisition module is specifically configured to: receive second indication information sent by the first remote terminal and/or the second remote terminal, and determine the mapping relationship between the first identification information and the second identification information according to the second indication information; or determine the mapping relationship between the first identification information and the second identification information according to the first identification information and currently available second identification information of the relay terminal.

In some optional implementations, the acquisition module is specifically configured to: determine currently unoccupied candidate second identification information as the currently available second identification information of the relay terminal; and for the first identification information, select the second identification information from the currently available second identification information of the relay terminal; and determine the mapping relationship between the first identification information and the second identification information according to the second identification information.

In some optional implementations, the sending module is specifically configured to: send the mapping relationship to the first remote terminal through a first PC5-RRC signaling between the relay terminal and the first remote terminal; and/or send the mapping relationship to the second remote terminal through a second PC5-RRC signaling between the relay terminal and the second remote terminal.

In some optional implementations, when the relay terminal performs data transmission with the first remote terminal through the direct communication interface, the second identification information is carried in a PDU header of an adaptation layer; and/or when the relay terminal performs data transmission with the second remote terminal through the direct communication interface, the second identification information is carried in the PDU header of the adaptation layer.

In some optional implementations, the PDU header of the adaptation layer further includes at least one of the following: bearer identification information of an end-to-end direct communication interface between the first remote terminal and the second remote terminal; or a logical channel identification LCID of the end-to-end direct communication interface between the first remote terminal and the second remote terminal.

In a fourth aspect, an embodiment of the present disclosure provides a remote terminal, where the remote terminal is a first remote terminal or a second remote terminal, and the first remote terminal and the second remote terminal are in end-to-end communication connection through a relay terminal, the remote terminal includes: an acquisition module, configured to acquire a mapping relationship between first identification information and second identification information; and a determining module, configured to determine a PDU header format of an adaptation layer according to the mapping relationship; where the first identification information includes a source address and a target address used by a direct communication interface, or the first identification information includes the source address, the target address and a transmission type, and the number of bits of the second identification information is less than that of the first identification information.

In some optional implementations, the acquisition module is specifically configured to: receive the mapping relationship sent by the relay terminal; or determine the mapping relationship according to the first identification information and the second identification information.

In some optional implementations, the acquisition module is specifically configured to: acquire the first identification information; send second indication information and the first identification information to the relay terminal through a first PC5-RRC signaling between the first remote terminal and the relay terminal, and receive the mapping relationship sent by the relay terminal through the first PC5-RRC signaling; and/or send the second indication information and the first identification information to the relay terminal through a second PC5-RRC signaling between the second remote terminal and the relay terminal, and receive the mapping relationship sent by the relay terminal through the second PC5-RRC signaling.

In some optional implementations, the acquisition module is specifically configured to: acquire the first identification information; determine the currently unoccupied candidate second identification information as currently available second identification information of the relay terminal; and for the first identification information, select the second identification information from the currently available second identification information of the relay terminal; and determine the mapping relationship between the first identification information and the second identification information according to the second identification information.

In some optional implementations, the acquisition module is specifically configured for an upper layer of the first remote terminal to acquire the first identification information through a PC5-S signaling process, and send third indication information carrying the first identification information to a lower layer of the first remote terminal, so that the lower layer of the first remote terminal acquires the first identification information through the third indication information; or acquire the first identification information through an end-to-end PC5-RRC signaling interaction process performed by the lower layer of the first remote terminal.

In some optional implementations, the remote terminal further includes a sending module, configured for the first remote terminal to send the mapping relationship to the relay terminal through a first PC5-RRC signaling; or configured for the second remote terminal to send the mapping relationship to the relay terminal through a second PC5-RRC signaling; or configured for the first remote terminal to send the mapping relationship to the second remote terminal through an end-to-end third PC5-RRC signaling between the first remote terminal and the second remote terminal; or configured for the second remote terminal to send the mapping relationship to the first remote terminal through the third PC5-RRC signaling.

In some optional implementations, where when the first remote terminal and the second remote terminal perform data transmission through the direct communication interface, the second identification information is carried in a PDU header of an adaptation layer; and/or when the remote terminal performs data transmission with the relay terminal through the direct communication interface, the second identification information is carried in the PDU header of the adaptation layer.

In some optional implementations, the PDU header of the adaptation layer further includes at least one of the following: bearer identification information of an end-to-end direct communication interface between the first remote terminal and the second remote terminal; or a logical channel identification LCID of the end-to-end direct communication interface between the first remote terminal and the second remote terminal.

In a fifth aspect, an embodiment of the present disclosure provides a relay terminal, including:
a memory, configured to store a computer program;
a transceiver, configured to receive and send data under control of a processor;
the processor, configured to read the computer program in the memory and perform the following operations: acquiring first identification information used by a first remote terminal and a second remote terminal at a direct communication interface, where the first remote terminal and the second remote terminal are in end-to-end communication connection through the relay terminal; determining a mapping relationship between the first identification information and second identification information; and sending the mapping relationship to the first remote terminal and/or the second remote terminal; where the first identification information includes a source address and a target address used by the direct communication interface, or the first identification information includes the source address, the target address and a transmission type, and the number of bits of the second identification information is less than that of the first identification information.

In some optional implementations, the acquiring the first identification information used by the first remote terminal and the second remote terminal at the direct communication interface includes: receiving the first identification information sent by the first remote terminal and/or the second remote terminal; or acquiring, by a lower layer of the relay terminal, the first identification information from an upper layer of the relay terminal.

In some optional implementations, the receiving the first identification information sent by the first remote terminal and/or the second remote terminal includes: receiving the first identification information sent by the first remote terminal through a first PC5-RRC signaling; and/or receiving the first identification information sent by the second remote terminal through a second PC5-RRC signaling.

In some optional implementations, the acquiring, by the lower layer of the relay terminal, the first identification information from the upper layer of the relay terminal includes: acquiring, by the upper layer of the relay terminal, the first identification information through a PC5-S signaling process, and sending first indication information carrying the first identification information to the lower layer of the relay terminal, so that the lower layer of the relay terminal acquires the first identification information through the first indication information.

In some optional implementations, the determining the mapping relationship between the first identification information and the second identification information includes: receiving second indication information sent by the first remote terminal and/or the second remote terminal, and determining the mapping relationship between the first identification information and the second identification information according to the second indication information; or determining the mapping relationship between the first identification information and the second identification information according to the first identification information and currently available second identification information of the relay terminal.

In some optional implementations, the determining the mapping relationship between the first identification information and the second identification information according to the first identification information and the currently available second identification information of the relay terminal includes: determining currently unoccupied candidate second identification information as the currently available second identification information of the relay terminal; and for the first identification information, selecting the second identification information from the currently available second identification information of the relay terminal; and determining the mapping relationship between the first identification information and the second identification information according to the second identification information.

In some optional implementations, the sending the mapping relationship between the first identification information and the second identification information to the first remote terminal and/or the second remote terminal includes: sending the mapping relationship to the first remote terminal through a first PC5-RRC signaling between the relay terminal and the first remote terminal; and/or sending the mapping relationship to the second remote terminal through a second PC5-RRC signaling between the relay terminal and the second remote terminal.

In some optional implementations, when the relay terminal performs data transmission with the first remote terminal through the direct communication interface, the second identification information is carried in a protocol unit PDU header of an adaptation layer; and/or when the relay terminal performs data transmission with the second remote terminal through the direct communication interface, the second identification information is carried in the PDU header of the adaptation layer.

In some optional implementations, the PDU header of the adaptation layer further includes at least one of the following: bearer identification information of an end-to-end direct communication interface between the first remote terminal and the second remote terminal; or a logical channel identification LCID of the end-to-end direct communication interface between the first remote terminal and the second remote terminal.

In a sixth aspect, an embodiment of the present disclosure provides a remote terminal, where the remote terminal is a first remote terminal or a second remote terminal, and the first remote terminal is in end-to-end communication connection with the second remote terminal through a relay terminal, the remote terminal includes:
a memory, configured to store a computer program;
a transceiver, configured to receive and send data under control of a processor;
the processor, configured to read the computer program in the memory and perform the following operations: acquiring a mapping relationship between first identification information and second identification information; determining a PDU header format of an adaptation layer according to the mapping relationship; where the first identification information includes a source address and a target address used by a direct communication interface, or the first identification information includes the source address, the target address and a transmission type, and the number of bits of the second identification information is less than that of the first identification information.

In some optional implementations, the acquiring the mapping relationship between the first identification information and the second identification information includes: receiving the mapping relationship sent by the relay terminal; or determining the mapping relationship according to the first identification information and the second identification information.

In some optional implementations, the receiving the mapping relationship sent by the relay terminal includes: acquiring the first identification information; and sending second indication information and the first identification information to the relay terminal through a first PC5-RRC signaling between the first remote terminal and the relay terminal, and receiving the mapping relationship sent by the relay terminal through the first PC5-RRC signaling; and/or sending the second indication information and the first identification information to the relay terminal through a second PC5-RRC signaling between the second remote terminal and the relay terminal, and receiving the mapping relationship sent by the relay terminal through the second PC5-RRC signaling.

In some optional implementations, the determining the mapping relationship according to the first identification information and the second identification information includes: acquiring the first identification information; determining currently unoccupied candidate second identification information as currently available second identification information of the relay terminal; for the first identification information, selecting the second identification information from the currently available second identification information of the relay terminal; and determining the mapping relationship between the first identification information and the second identification information according to the second identification information.

In some optional implementations, the acquiring the first identification information includes: acquiring, by an upper layer of the first remote terminal, the first identification information through a PC5-S signaling process, and sending third indication information carrying the first identification information to a lower layer of the first remote terminal, so that the lower layer of the first remote terminal acquires the first identification information through the third indication information; or acquiring the first identification information through an end-to-end PC5-RRC signaling interaction process performed by the lower layer of the first remote terminal.

In some optional implementations, the processor is further configured to perform at least one of the following operations: sending, by the first remote terminal, the mapping relationship to the relay terminal through a first PC5-RRC signaling; or sending, by the second remote terminal, the mapping relationship to the relay terminal through a second PC5-RRC signaling; or sending, by the first remote terminal, the mapping relationship to the second remote terminal through an end-to-end third PC5-RRC signaling between the first remote terminal and the second remote terminal; or sending, by the second remote terminal, the mapping relationship to the first remote terminal through the third PC5-RRC signaling.

In some optional implementations, when the first remote terminal and the second remote terminal perform data transmission through the direct communication interface, the second identification information is carried in a PDU header of an adaptation layer; and/or when the remote terminal performs data transmission with the relay terminal through the direct communication interface, the second identification information is carried in the PDU header of the adaptation layer.

In some optional implementations, the PDU header of the adaptation layer further includes at least one of the following: bearer identification information of an end-to-end direct communication interface between the first remote terminal and the second remote terminal; a logical channel identification LCID through the end-to-end direct communication interface between the first remote terminal and the second remote terminal.

In a seventh aspect, an embodiment of the present disclosure provides a processor-readable storage medium, where the processor-readable storage medium stores a computer program for causing a processor to execute the information processing method as in any one of the first aspect and/or the second aspect.

In an eighth aspect, an embodiment of the present disclosure provides a computer program product, including a computer program which, when executed by a processor, realizes the information processing method as in any one of the first aspect and/or the second aspect.

The present disclosure provides an information processing method, an apparatus, a terminal and a storage medium. A relay terminal or a remote terminal acquires first identification information used by a first remote terminal and a second remote terminal at a direct communication interface, where the first remote terminal and the second remote terminal are in end-to-end communication connection through the relay terminal; determine a mapping relationship between the first identification information and second identification information; and sends the mapping relationship to the first remote terminal and/or the second remote terminal. Through this scheme, as the number of bits of the second identification information is less than that of the first identification information, in a process of end-to-end communication, when the second identification information is carried in an adaptation layer, a head overhead of the adaptation layer can be saved, thereby improving a resource utilization rate when the remote terminal performs data transmission through the relay terminal.

It should be understood that what is described in the above summary section is not intended to define key or important features of the embodiments of the present disclosure, nor is it intended to limit the scope of the present disclosure. Other features of the present disclosure will be readily understood from the following description.

### BRIEF DESCRIPTION OF DRAWINGS

FIG. 1 is a schematic diagram of an application scenario provided by an embodiment of the present disclosure.
FIG. 2 is a first schematic diagram for signaling interaction of an information processing method provided by an embodiment of the present disclosure.
FIG. 3a is a first schematic diagram of a PDU header of an adaptation layer provided by an embodiment of the present disclosure.
FIG. 3b is a second schematic diagram of a PDU header of an adaptation layer provided by an embodiment of the present disclosure.
FIG. 4 is a second schematic diagram for signaling interaction of an information processing method provided by an embodiment of the present disclosure.
FIG. 5 is a third schematic diagram for signaling interaction of an information processing method provided by an embodiment of the present disclosure.
FIG. 6 is a fourth schematic diagram for signaling interaction of an information processing method provided by an embodiment of the present disclosure.
FIG. 7 is a first structural schematic diagram of a relay terminal provided by an embodiment of the present disclosure.
FIG. 8 is a first structural diagram of a remote terminal provided by an embodiment of the present disclosure.
FIG. 9 is a second structural schematic diagram of a relay terminal provided by an embodiment of the present disclosure.
FIG. 10 is a second structural schematic diagram of a remote terminal provided by an embodiment of the present disclosure.

### DESCRIPTION OF EMBODIMENTS

In this disclosure, the term "and/or" describes a relationship of related objects, indicating that there can be three kinds of relationships, for example, A and/or B would mean that A exists alone, A and B exist at the same time, and B exists alone. The character "/" generally indicates that the context object is in an "or" relationship. In the embodiment of this disclosure, the term "multiple" refers to two or more, and other quantifiers have similar meanings.

In the following, the technical scheme in the embodiments of the present disclosure will be clearly and completely described with reference to the accompanying drawings in the embodiments of the present disclosure. Obviously, the described embodiments are only parts of the embodiments of the present disclosure, but not all of the embodiments. Based on the embodiments in this disclosure, all other embodiments obtained by those skilled in the art without creative effort belong to the scope of protection in this disclosure.

In order to expand the network coverage in the 5G NR system, UE-to-Network Relay, which is a relay from a terminal to a network device, and UE-to-UE Relay, which is a relay from a terminal to a terminal, are introduced. Among them, a Relay UE (Relay UE) is a terminal within a network coverage, and a remote terminal can be located within or outside the network coverage. For UE-to-Network Relay, the remote terminal can access a network device through the relay terminal, and for UE-to-UE Relay, the remote terminal can access another remote terminal through the relay terminal.

In the above scenario of UE-to-UE Relay, a bearer between two remote terminals is referred to as an end-to-end bearer, and two PC5 RLC channels (that is, PC5 RLC channels between two remote terminals and a relay terminal) are required for bottom-layer transmission of an end-to-end bearer.

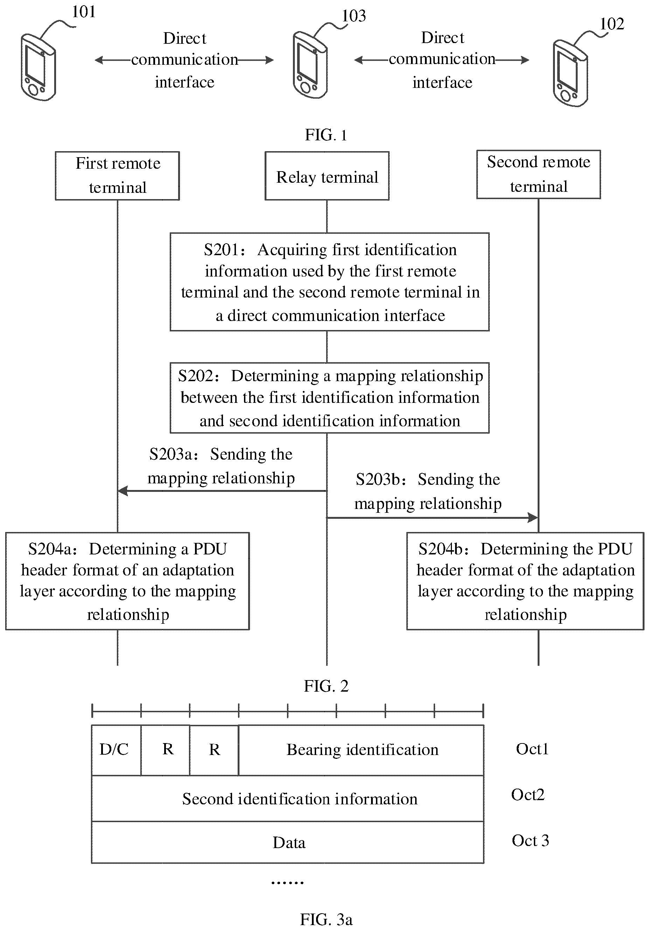

FIG. 1 is a schematic diagram of an application scenario provided by an embodiment of the present disclosure. It should be noted that this scenario is a communication architecture for a UE-to-UE Relay. As shown in FIG. 1, this scenario includes a first remote terminal 101, a second remote terminal 102 and a relay terminal 103.

It should be noted that for the UE-to-UE relay, interfaces used between the relay terminal 103 and the first remote terminal 101, and between the relay terminal 103 and the second remote terminal 102 are all direct communication, in which direct communication refers to a way that adjacent terminals can perform data transmission through a direct communication link (also referred to as Sidelink or PCS) in a short distance range, and the wireless interface corresponding to the Sidelink is referred to as a direct communication interface (also referred to as Sidelink interface or PCS interface)

Normally, the direct communication interface identifies the communication peer through a combination of a source address, a target address and a transmission type. Among them, the size of the source address is 24 bits, the size of the target address is 24 bits, and the transmission type (for example, multicast, unicast, broadcast, etc.) needs to occupy at least 2 bits. In other words, in the communication process, identification information requires at least 50 bits, and considering a whole byte problem, it needs to occupy at least 7 bytes of overhead.

In the above UE-to-UE Relay, an adaptation layer needs to perform a mapping between two direct communication links, and both of which need to use the identification information of the direct communication interface carried in the adaptation layer. If the identification information of 50-bits of direct communication interface is used, the overhead of 7 bytes will reduce the resource utilization rate in the end-to-end communication process, thus reducing the data transmission efficiency, which is basically unacceptable in this communication architecture.

In view of this, embodiments of the present disclosure provide an information processing method, an apparatus, a terminal and a storage medium, in which a relay terminal or a remote terminal determines first identification information used between two remote terminals for performing end-to-end data transmission by the relay terminal, determines second identification information the number of bits of which is less than that of the first identification information according to the first identification information, and sends a mapping relationship between the first identification information and second identification information to the two remote terminals, so that when the two remote terminals perform end-to-end communication according to the second identification information, the second identification information is carried in an adaptation layer, which saves a head overhead of the adaptation layer, thereby improving a resource utilization rate in the end-to-end communication process and ensuring an end-to-end data transmission efficiency.

It should be noted that the above first remote terminal 101, the second remote terminal 102 and the relay terminal 103 can all be devices that provide voice and/or data connectivity to users, handheld devices with wireless connection function, or other processing devices connected to wireless modems.

In addition, the names of the terminals may vary in different systems. For example, in a 5G system, the above terminals may be referred to as User Equipment (User Equipment, UE), and the terminals may also be wireless terminals, where the wireless terminals can communicate with one or more core networks (Core networks, CN) through a radio access network (radio access network, RAN). Wireless terminals can be mobile terminals, such as mobile phones (or "cellular" phones) and computers with mobile terminals, such as portable, pocket-sized, handheld, computer-built or vehicle-mounted mobile devices, which exchange languages and/or data with wireless access networks. For example, Personal Communication Service (Personal Communication Service, PCS) phones, cordless phones, Session Initiated Protocol (Session Initiated Protocol, SIP) phones, Wireless Local Loop (Wireless Local Loop, WLL) stations, Personal Digital Assistant (Personal Digital Assistant, PDA) and other devices. A wireless terminal may also be referred to as a system, a subscriber unit (subscriber unit), a subscriber station (subscriber station), A mobile station (mobile station), a mobile (mobile), a remote station (remote station), an access point (access point), a remote terminal (remote terminal), an access terminal (access terminal), a user terminal (user terminal), a user agent (user agent) and a user device (user device), which are not limited in this embodiment.

The technical scheme provided by the embodiments of the present disclosure can be applied to various systems. For example, the applicable system can be a global system of mobile communication (global system of mobile communication, GSM) system, a code division multiple access (code division multiple access, CDMA), a wideband code division multiple access (wideband code division multiple access, WCDMA), a general packet radio service (general packet radio service, GPRS) system, a long-term evolution (long term evolution, LTE) system, a LTE frequency division duplex (frequency division duplex, FDD) system, a LTE time division duplex (LTE time division duplex, TDD) system, a long term evolution advanced (long term evolution advanced, LTE-A) system, a universal mobile telecommunication system (universal mobile telecommunication system, UMTS), a worldwide Interoperability for microwave access (worldwide Interoperability for microwave access, WiMAX) system, 5G New Radio (New Radio, NR) system, etc. These systems all include terminals and network devices. The system also includes the core network, such as an evolved packet system (Evolved Packet System, EPS) and a 5G system (5GS), etc.

It should be understood that the above-mentioned FIG. 1 is schematic, and other network devices may be included in the above-mentioned scenario, such as wireless repeater devices and wireless backhaul devices, which are not shown in FIG. 1.

It should be noted that the method and the device provided by the embodiments of the present disclosure are based on the same application concept, and since the principles of the method and the device for solving problems are similar, the implementation of the device and the method can be referred to each other, and the repetition has been omitted here.

FIG. 2 is a first schematic diagram for signaling interaction of an information processing method provided by an embodiment of the present disclosure. As shown in FIG. 2, the information processing method may include the following steps:
S201: the relay terminal acquires first identification information used by a first remote terminal and a second remote terminal in a direct communication interface.

The first identification information includes a source address and a target address used by the direct communication interface. Alternatively, the first identification information includes the source address, the target address and a transmission type.

Optionally, before step S201, the first remote terminal and the second remote terminal may establish an end-to-end connection through the relay terminal. Specifically, the first remote terminal may first send a discovery (discovery) message, and after the relay terminal receives the discovery message sent by the first remote terminal, it adds identification information of the relay terminal to the discovery message to obtain a target discovery message, and then forwards the target discovery message. Further, after receiving the target discovery message sent by the relay terminal, the second remote terminal determines the relay terminal through the identification information in the target discovery message, and establishes an end-to-end Radio Resource Control (Radio Resource Control, RRC) connection with the first remote terminal through the relay terminal.

S202: the relay terminal determines a mapping relationship between the first identification information and second identification information.

In the embodiment of the present disclosure, the number of bits of the second identification information is less than that of the first identification information, and the method for determining the second identification information is shown in the subsequent embodiments.

S203a: the relay terminal sends the mapping relationship between the first identification information and the second identification information to the first remote terminal.

S203b: the relay terminal sends the mapping relationship between the first identification information and the second identification information to the second remote terminal.

S204a: the first remote terminal determines a Protocol Data Unit (Protocol Data Unit, PDU) header format of an adaptation layer according to the mapping relationship.

S204b: the first remote terminal determines the PDU header format of the adaptation layer according to the mapping relationship.

It should be noted that an execution order of the above steps S203a and S203b and an execution order of the above steps S204a and S204b are not particularly limited in the embodiment of the present disclosure.

Since the number of bits of the second identification information is less than that of the first identification information, compared with the manner of carrying the first identification information in the adaptation layer in the prior art, in the embodiment of the present disclosure, when the second identification information is carried in the adaptation layer during the end-to-end communication, the head overhead of the adaptation layer can be saved, so as to improve a resource utilization rate when the remote terminal performs data transmission through U2U relay and ensure an end-to-end data transmission efficiency .

It should be noted that at least one of the first remote terminal, the second remote terminal and the relay terminal carries the second identification information in a Packet Data Unit-header (Packet Data Unit-header, PDU-header) of the adaptation layer when performing data transmission through the direct communication interface. Accordingly, when a data receiver (including the relay device and the remote terminal) receives the PDU header of the adaptation layer, it can determine the source address, the target address and the transmission type in the first identification information according to the second identification information and the mapping relationship, so as to receive or forward data according to the identification information and realize the end-to-end data transmission.

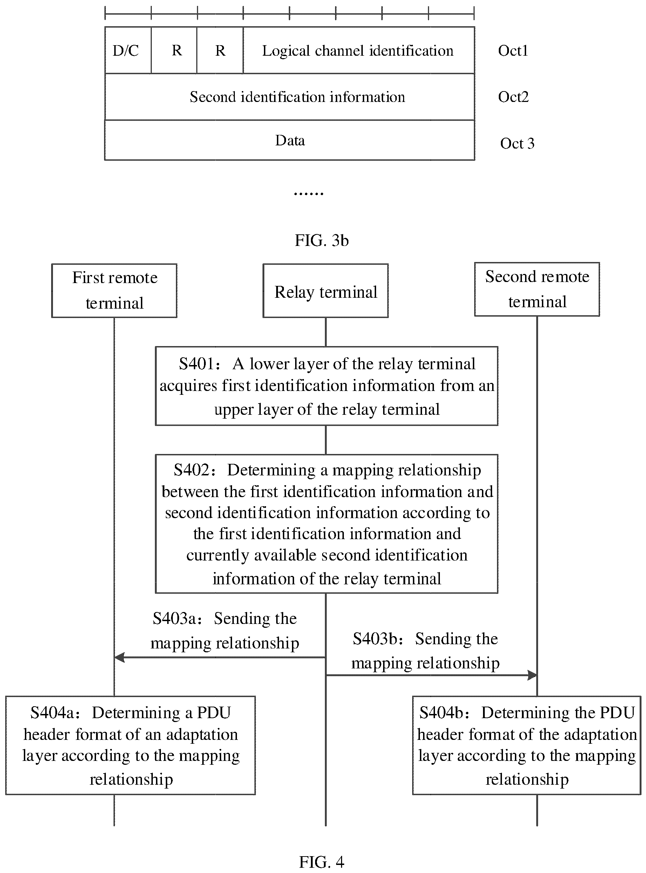

Next, with reference to FIG. 3a and FIG. 3b, an exemplary description will be given for the PDU header format of the adaptation layer used by the remote terminal in an end-to-end communication.

Example 1: FIG. 3a is a first schematic diagram of a PDU header of the adaptation layer provided by an embodiment of the present disclosure. As shown in FIG. 3a, the protocol unit header includes the second identification information and an end-to-end Bearer ID (Bearer ID) between the first remote terminal and the second remote terminal.

Example 2: FIG. 3b is a second schematic diagram of a PDU header of the adaptation layer provided by an embodiment of the present disclosure. As shown in FIG. 3b, the PDU header includes the second identification information and an end-to-end logical channel identify (logical channel identify, LCID) between the first remote terminal and the second remote terminal.

It should be noted that in FIG. 3a, the second identification information is 8 bits, the Bearer ID is 5 bits, and the PDU header of the adaptation layer occupies 2 bytes. In FIG. 3b, the second identification information is 8 bits, the LCID is 5 bits, and the PDU header of the adaptation layer occupies 2 bytes. Therefore, compared with the existing methods, when the second identification information is carried in the adaptation layer during the end-to-end communication, the header overhead of the adaptation layer is greatly saved, thereby improving the resource utilization rate in the end-to-end communication process and ensuring the end-to-end data transmission efficiency.

In the first example, the first identification information can be acquired by the relay terminal, and the mapping relationship is acquired by the relay terminal according to the first identification information. Next, it will be described in detail with reference to FIG. 4.

FIG. 4 is a second schematic diagram for signaling interaction of an information processing method provided by an embodiment of the present disclosure. As shown in FIG. 4, the information processing method may include the following steps:
S401: a lower layer of a relay terminal acquires first identification information from an upper layer of the relay terminal.

Specifically, the upper layer of the relay terminal acquires the first identification information through a PC5-S signaling process, and sends first indication information carrying the first identification information to the lower layer of the relay terminal, so that the lower layer of the relay terminal acquires the first identification information through the first indication information.

It should be noted that the specific types of the upper layer and the lower layer are not particularly limited in the embodiment of the present disclosure. For example, the upper layer may be a PC5-S protocol layer and the lower layer may be a PC5-RRC layer. That is, a possible example of the embodiment of the present disclosure is that the PC5-S protocol layer of the relay terminal acquires the first identification information used between the first remote terminal and the second remote terminal, and notifies the PC5-RRC layer of the remote terminal.

It should be noted that for a scheme of establishing an RRC connection between the first remote terminal and the second remote terminal through the relay terminal, please refer to the embodiment shown in FIG. 2, and the details of which are not repeated herein.

S402: the relay terminal determines a mapping relationship between the first identification information and second identification information according to the first identification information and currently available second identification information of the relay terminal.

In some optional implementations, the relay terminal determining the mapping relationship through the above step S402 specifically includes the following steps:
(1) determining currently unoccupied candidate second identification information as the currently available second identification information;
(2) for the first identification information, selecting the second identification information from the currently available second identification information of the relay terminal; and
(3) determining the mapping relationship between the first identification information and the second identification information according to the second identification information.

It should be noted that the manner of selecting the second identification information from the available second identification information is not limited by the embodiments of the present disclosure. For example, one piece of the available second identification information can be randomly selected as the second identification information.

For example, taking the first identification information including an L2 source address identification, an L2 target address identification and communication type identification information, and a length of the second identification information being 8 bits as an example, after receiving one piece of the first identification information, the relay terminal can randomly select one piece of unoccupied second identification information from the currently unused candidate second identification, and then determine the mapping relationship between the first identification information and the second identification information according to the first identification information and the second identification information.

S403a: the relay terminal sends the mapping relationship between the first identification information and the second identification information to the first remote terminal.

Specifically, the relay terminal may send the mapping relationship to the first remote terminal through a first PC5-RRC signaling between the relay terminal and the first remote terminal.

S403b: the relay terminal sends the mapping relationship between the first identification information and the second identification information to the second remote terminal.

Similarly, the relay terminal can send the mapping relationship to the second remote terminal through a second PC5-RRC signaling between the relay terminal and the second remote terminal.

S404a: the first remote terminal determines a PDU header format of the adaptation layer according to the mapping relationship.

S404b: the second remote terminal determines the PDU header format of the adaptation layer according to the mapping relationship.

At least one of the first remote terminal, the second remote terminal and the relay terminal carries the second identification information in the PDU header of the adaptation layer when performing data transmission through the direct communication interface.

It should be noted that for the PDU header format, please refer to the embodiment shown in FIG. 3, which is not repeated herein. In addition, an execution order of the above steps S403a and S403b and an execution order of the above steps S404a and S404b are not limited in the embodiment of the present disclosure.

Since the number of bits of the second identification information is less than that of the first identification information, compared with the manner of carrying the first identification information in the adaptation layer in the prior art, in the embodiment of the present disclosure, when the second identification information is carried in the adaptation layer during the end-to-end communication, the head overhead of the adaptation layer can be saved, so that the resource utilization rate when the remote terminal performs data transmission through the relay terminal can be improved, and the end-to-end data transmission efficiency can be guaranteed. In addition, when the relay terminal acquires the first identification information, it acquires the first identification information from the upper layer of the relay terminal through the lower layer of the relay terminal, and no intervention of the remote terminal is needed in this process, so that signaling interaction can be reduced and the implementation complexity of the present disclosure can be reduced.

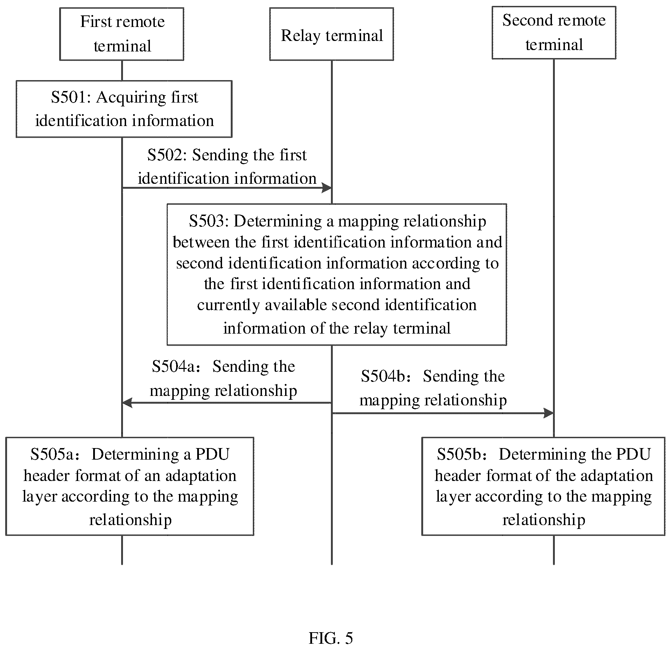

In the second example, the first identification information can also be acquired by the remote terminal, and the mapping relationship is acquired by the relay terminal according to the first identification information. Next, it will be described in detail with reference to FIG. 5.

FIG. 5 is a second schematic diagram for signaling interaction of the information processing method provided by the embodiment of the present disclosure. As shown in FIG. 5, the information processing method may include the following steps:
S501: the remote terminal acquires first identification information.

It should be noted that for a scheme of establishing an RRC connection between the first remote terminal and the second remote terminal through the relay terminal, please refer to the embodiment shown in FIG. 2, and the details of which are not repeated herein.

In some embodiments, the remote terminal (the first remote terminal or the second remote terminal) acquiring the first identification information includes but is not limited to the following two implementations.

(1) An upper layer of the remote terminal acquires the first identification information through a PC5-S signaling process, and sends third indication information carrying the first identification information to a lower layer of the remote terminal, so that the lower layer of the remote terminal acquires the first identification information through the third indication information.

It should be noted that the specific types of the upper layer and the lower layer of the remote terminal are not limited in this embodiment of the present disclosure. For example, the upper layer of the remote terminal may be the PC5-S protocol layer, and the lower layer of the remote terminal may be the PC5-RRC layer. That is, in an example of the present disclosure, after determining by the remote terminal, first identification information used between the first remote terminal and the second remote terminal, the third indication information carrying the first identification information is sent to the PC5-RRC layer of the remote terminal through the upper layer PC5-S protocol layer of the remote terminal, so that the PC5-RRC layer of the remote terminal acquires the first identification information through the third indication information.

(2) The first identification information is acquired through an end-to-end PC5-RRC signaling interaction process performed by the lower layer of the first remote terminal.

S502: the remote terminal sends the first identification information to the relay terminal.

Specifically, the first remote terminal sends the second indication information and the first identification information to the relay terminal through a first PC5-RRC signaling between the first remote terminal and the relay terminal.

It should be noted that the remote terminal in the embodiment may be the first remote terminal and/or the second remote terminal, and the first remote terminal is taken as an example in steps S501~S502 in FIG. 5, but it is not limited to this. For example, the first identification information can also be acquired through the second remote terminal, and the second remote terminal sends the second indication information and the first identification information to the relay terminal through a second PC5-RRC signaling between the second remote terminal and the relay terminal.

S503: the relay terminal determines a mapping relationship between the first identification information and second identification information according to the first identification information and currently available second identification information of the relay terminal.

Specifically, the above step S503 may include the following steps:
(1) determining currently unoccupied candidate second identification information as the currently available second identification information;
(2) for the first identification information, selecting the second identification information from the currently available second identification information of the relay terminal; and
(3) determining the mapping relationship between the first identification information and the second identification information according to the second identification information.

It should be noted that the implementation manner of step S503 is similar to the method and principle of step S402 in FIG. 4, which will not be repeated herein.

S504a: the relay terminal sends the mapping relationship between the first identification information and the second identification information to the first remote terminal.

Exemplary, the relay terminal sends the mapping relationship to the first remote terminal through a first PC5-RRC signaling between the relay terminal and the first remote terminal.

S504b: the relay terminal sends the mapping relationship between the first identification information and the second identification information to the second remote terminal.

Specifically, the relay terminal sends the mapping relationship to the second remote terminal through a second PC5-RRC signaling between the relay terminal and the second remote terminal.

S505a: the first remote terminal determines a PDU header format of the adaptation layer according to the mapping relationship.

S505b: the second remote terminal determines the PDU header format of the adaptation layer according to the mapping relationship.

At least one of the first remote terminal, the second remote terminal and the relay terminal carries the second identification information in the PDU header of the adaptation layer when performing data transmission through the direct communication interface.

It should be noted that for the PDU header format, please refer to the embodiment shown in FIG. 3, which is not be repeated herein. In addition, an execution order of the above steps S504a and S504b and an execution order of the above steps S505a and S505b are not particularly limited in the embodiment of the present disclosure.

Since the number of bits of the second identification information is less than that of the first identification information, compared with the manner of carrying the first identification information in the adaptation layer in the prior art, in the embodiment of the present disclosure, when the second identification information is carried in the adaptation layer during the end-to-end communication, the head overhead of the adaptation layer can be saved, so that the resource utilization rate when the remote terminal performs data transmission through the relay terminal can be improved, and the end-to-end data transmission efficiency can be guaranteed. In addition, the remote terminal acquires the first identification information, and the relay terminal determines the mapping relationship according to the first identification information, so that the scheme can be flexibly applied to various communication scenarios.

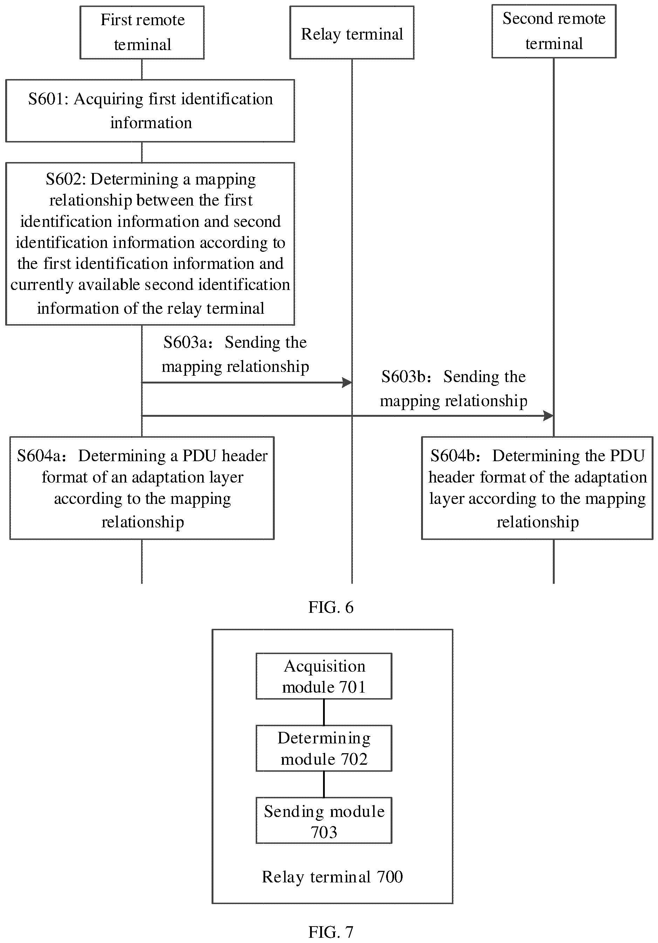

In the third example, the first identification information can also be acquired by the remote terminal, and the mapping relationship is acquired according to the first identification information. Next, it will be described in detail with reference to FIG. 6:

FIG. 6 is a third schematic diagram for signaling interaction of the information processing method provided by an embodiment of the present disclosure. As shown in FIG. 6, the information processing method may include the following steps:
S601: the remote terminal acquires first identification information.

It should be noted that for a scheme of establishing an RRC connection between the first remote terminal and the second remote terminal through the relay terminal, please refer to the embodiment shown in FIG. 2, and the details of which are not repeated herein.

In some embodiments, the remote terminal (the first remote terminal or the second remote terminal) acquiring the first identification information includes but is not limited to the following two implementations.

(1) An upper layer of the first remote terminal acquires the first identification information through a PC5-S signaling process, and sends third indication information carrying the first identification information to a lower layer of the first remote terminal, so that the lower layer of the first remote terminal acquires the first identification information through the third indication information.

(2) The first identification information is acquired through an end-to-end PC5-RRC signaling interaction process performed by the lower layer of the first remote terminal.

It should be noted that the implementation manner of step S601 above is similar to the method and principle of step S501 in FIG. 5, which will not be repeated herein.

S602: the remote terminal determines a mapping relationship between the first identification information and second identification information according to the first identification information and currently available second identification information of the relay terminal.

In some embodiments, the remote device determining the mapping relationship specifically includes the following steps:
(1) determining currently unoccupied candidate second identification information as the currently available second identification information;
(2) for the first identification information, selecting the second identification information from the currently available second identification information of the relay terminal; and
(3) determining the mapping relationship between the first identification information and the second identification information according to the second identification information.

S603a: the remote terminal sends the mapping relationship between the first identification information and the second identification information to the relay terminal.

Specifically, if the remote terminal is the first remote terminal, the first remote terminal can send the mapping relationship to the relay terminal through a first PC5-RRC signaling between the relay terminal and the first remote terminal. Similarly, if the remote terminal is the second remote terminal, the second remote terminal can send the mapping relationship to the relay terminal through a second PC5-RRC signaling between the relay terminal and the second remote terminal.

S603b: the remote terminal sends the mapping relationship between the first identification information and the second identification information to another remote terminal.

Exemplary, if the remote terminal is the first remote terminal, the first remote terminal sends the mapping relationship to the second remote terminal through a third PC5-RRC signaling between the first remote terminal and the second remote terminal. Similarly, if the remote terminal is a second remote terminal, the second remote terminal can send the mapping relationship to the first remote terminal through the third PC5-RRC signaling between the first remote terminal and the second remote terminal.

It should be noted that in the embodiment shown in FIG. 6, steps S601~S602, and S603a and S603b all take the remote terminal being the first remote terminal as an example, but the practical application is not limited to this.

S604a: the first remote terminal determines a PDU header format of the adaptation layer according to the mapping relationship.

S604b: the second remote terminal determines the PDU header format of the adaptation layer according to the mapping relationship.

At least one of the first remote terminal, the second remote terminal and the relay terminal carries the second identification information in the PDU header of the adaptation layer when performing data transmission through the direct communication interface.

It should be noted that for the PDU header format, please refer to the embodiment shown in FIG. 3, which is not be repeated herein. In addition, an execution order of the above steps S603a and S603b and an execution order of the above steps S604a and S604b are not limited in the embodiments of the present disclosure.

Since the number of bits of the second identification information is less than that of the first identification information, compared with the manner of carrying the first identification information in the adaptation layer in the prior art, in the embodiment of the present disclosure, when the second identification information is carried in the adaptation layer during the end-to-end communication, the head overhead of the adaptation layer can be saved, so that the resource utilization rate when the remote terminal performs data transmission through the relay terminal is improved, and the end-to-end data transmission efficiency can be guaranteed. In addition, the remote terminal acquires the first identification information and determines the mapping relationship according to the first identification information, so that the scheme can be flexibly applied to various communication scenarios. For example, in the scenario where the relay terminal cannot acquire the first identification information and the mapping relationship, the first identification information is acquired through the remote terminal. Acquiring the mapping relationship according to the first identification information can also achieve the purpose of reducing the header overhead of the adaptation layer in the present disclosure.

On the target relay terminal side, an embodiment of the present disclosure provides a relay terminal. FIG. 7 is a first structural schematic diagram of a relay terminal provided by an embodiment of the present disclosure. As shown in FIG. 7, the relay terminal 700 includes:
an acquisition module 701, configured to acquire first identification information used by a first remote terminal and a second remote terminal at a direct communication interface, where the first remote terminal and the second remote terminal are in end-to-end communication connection through the relay terminal; a determining module 702, configured to determine a mapping relationship between the first identification information and second identification information; and a sending module 703, configured to send the mapping relationship to the first remote terminal and/or the second remote terminal; where the first identification information includes a source address and a target address used by the direct communication interface, or the first identification information includes the source address, the target address and a transmission type, and the number of bits of the second identification information is less than that of the first identification information.

In some optional implementations, the acquisition module 701 is specifically configured to: receive the first identification information sent by the first remote terminal and/or the second remote terminal; or acquire, by a lower layer of the relay terminal, the first identification information from an upper layer of the relay terminal.

In some optional implementations, the acquisition module 701 is specifically configured to: receive the first identification information sent by the first remote terminal through a first PC5-RRC signaling; and/or receive the first identification information sent by the second remote terminal through a second PC5-RRC signaling.

In some optional implementations, the acquisition module 701 is specifically configured for the upper layer of the relay terminal to acquire the first identification information through a PC5-S signaling process, and send first indication information carrying the first identification information to the lower layer of the relay terminal, so that the lower layer of the relay terminal acquires the first identification information through the first indication information.

In some optional implementations, the acquisition module 701 is specifically configured to: receive second indication information sent by the first remote terminal and/or the second remote terminal, and determine the mapping relationship between the first identification information and the second identification information according to the second indication information; or determine the mapping relationship between the first identification information and the second identification information according to the first identification information and currently available second identification information of the relay terminal.

In some optional implementations, the acquisition module 701 is specifically configured to: determine currently unoccupied candidate second identification information as the currently available second identification information of the relay terminal; and for the first identification information, select the second identification information from the currently available second identification information of the relay terminal; and determine the mapping relationship between the first identification information and the second identification information according to the second identification information.

In some optional implementations, the sending module 703 is specifically configured to: send the mapping relationship to the first remote terminal through a first PC5-RRC signaling between the relay terminal and the first remote terminal; and/or send the mapping relationship to the second remote terminal through a second PC5-RRC signaling between the relay terminal and the second remote terminal.

In some optional implementations, when the relay terminal performs data transmission with the first remote terminal through the direct communication interface, the second identification information is carried in a PDU header of an adaptation layer; and/or when the relay terminal performs data transmission with the second remote terminal through the direct communication interface, the second identification information is carried in the PDU header of the adaptation layer.

In some optional implementations, the PDU header of the adaptation layer further includes at least one of the following: bearer identification information of an end-to-end direct communication interface between the first remote terminal and the second remote terminal; or a logical channel identification LCID of the end-to-end direct communication interface between the first remote terminal and the second remote terminal.

It should be noted here that the relay terminal provided by the present disclosure can correspondingly realize all the method steps realized by the relay terminal in the above method embodiments, and can achieve the same technical effect, so the same parts and beneficial effects between this embodiment and the method embodiment are not repeated herein.

On the remote terminal side, the embodiments of the present disclosure provides a remote terminal, which is a first remote terminal or a second remote terminal, and the first remote terminal and the second remote terminal are in end-to-end communication connection through a relay terminal.

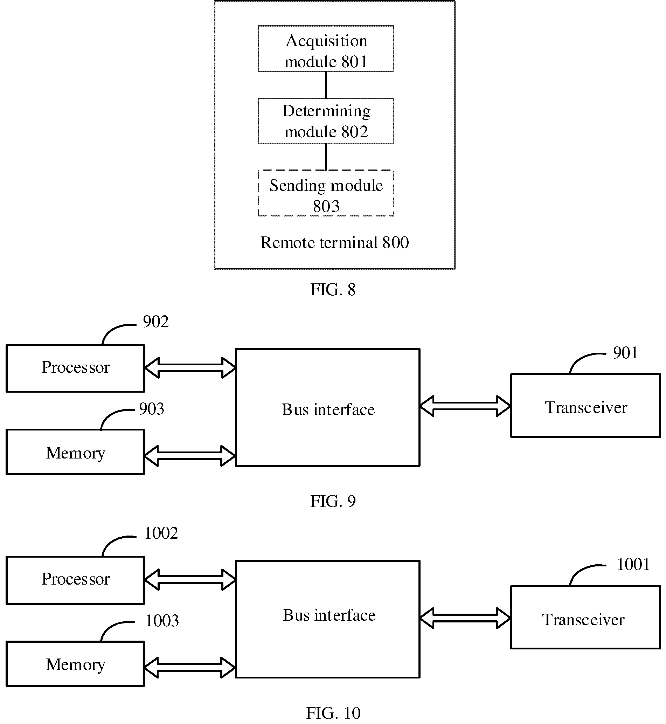

FIG. 8 is a first structural schematic diagram of a remote terminal provided by an embodiment of the present disclosure. As shown in FIG. 8, the remote terminal 800 includes an acquisition module 801, configured to acquire a mapping relationship between first identification information and second identification information; and a determining module 802, configured to determine a PDU header format of an adaptation layer according to the mapping relationship; where the first identification information includes a source address and a target address used by a direct communication interface, or the first identification information includes the source address, the target address and a transmission type, and the number of bits of the second identification information is less than that of the first identification information.

In some optional implementations, the acquisition module 801 is specifically configured to: receive the mapping relationship sent by the relay terminal; or determine the mapping relationship according to the first identification information and the second identification information.

In some optional implementations, the acquisition module 801 is specifically configured to: acquire the first identification information; send second indication information and the first identification information to the relay terminal through a first PC5-RRC signaling between the first remote terminal and the relay terminal, and receive the mapping relationship sent by the relay terminal through the first PC5-RRC signaling; and/or send the second indication information and the first identification information to the relay terminal through a second PC5-RRC signaling between the second remote terminal and the relay terminal, and receive the mapping relationship sent by the relay terminal through the second PC5-RRC signaling.

In some optional implementations, the acquisition module 801 is specifically configured to: acquire the first identification information; determine the currently unoccupied candidate second identification information as currently available second identification information of the relay terminal; and for the first identification information, select the second identification information from the currently available second identification information of the relay terminal; and determine the mapping relationship between the first identification information and the second identification information according to the second identification information.

In some optional implementations, the acquisition module 801 is specifically configured for an upper layer of the first remote terminal to acquire the first identification information through a PC5-S signaling process, and send third indication information carrying the first identification information to a lower layer of the first remote terminal, so that the lower layer of the first remote terminal acquires the first identification information through the third indication information; or acquire the first identification information through an end-to-end PC5-RRC signaling interaction process performed by the lower layer of the first remote terminal.

In some optional implementations, the remote terminal 800 further includes: a sending module 803, configured for the first remote terminal to send the mapping relationship to the relay terminal through a first PC5-RRC signaling; or configured for the second remote terminal to send the mapping relationship to the relay terminal through a second PC5-RRC signaling; or configured for the first remote terminal to send the mapping relationship to the second remote terminal through an end-to-end third PC5-RRC signaling between the first remote terminal and the second remote terminal; or configured for the second remote terminal to send the mapping relationship to the first remote terminal through the third PC5-RRC signaling.

In some optional implementations, where when the first remote terminal and the second remote terminal perform data transmission through the direct communication interface, the second identification information is carried in a PDU header of an adaptation layer; and/or when the remote terminal performs data transmission with the relay terminal through the direct communication interface, the second identification information is carried in the PDU header of the adaptation layer.

In some optional implementations, the PDU header of the adaptation layer further includes at least one of the following: bearer identification information through an end-to-end direct communication interface between the first remote terminal and the second remote terminal; or a logical channel identification LCID through the end-to-end direct communication interface between the first remote terminal and the second remote terminal.

It should be noted here that the remote terminal 800 provided by this disclosure can correspondingly realize all the method steps realized by the first remote terminal or the second remote terminal in the above method embodiment, and can achieve the same technical effect, therefore, same parts as those in the method embodiments and beneficial effects in this embodiment are not repeated herein.

FIG. 9 is a second schematic structural diagram of a relay terminal provided by an embodiment of the present disclosure. As shown in FIG. 9, the relay terminal includes a transceiver 901, a processor 902 and a memory 903.

The memory 903 is configured to store a computer program.

The transceiver 901 is configured to receive and send data under control of a processor 902.

In FIG. 9, the bus architecture can include any number of interconnected buses and bridges. Specifically, one or more processors represented by the processor 902 and various circuits of a memory represented by the memory 903 are linked together. The bus architecture can also link various other circuits, such as peripheral devices, voltage regulators and power management circuits, which are well known in the technical filed, and will not be further described here. The bus interface provides the interface. The transceiver 901 can be a plurality of elements, that is, it includes a transmitter and a receiver, and provides a unit for communicating with various other devices on a transmission media, such as wireless channels, wired channels, optical cables and the like. The processor 902 is responsible for managing the bus architecture and general processing, and the memory 903 can store data used by the processor 902 when performing operations.

The processor 902 is responsible for managing the bus architecture and general processing, and the memory 903 can store data used by the processor 902 when performing operations. Optionally, the processor 902 may be a central processing unit (central processing unit, CPU), an application specific integrated circuit (application specific integrated circuit, ASIC), a Field-Programmable Gate Array (Field-Programmable Gate Array, FPGA), or complex programmable logic device (complex programmable logic device, CPLD), and the processor can also adopt a multi-core architecture.

By calling the computer program stored in the memory 903, the processor 902 is configured to perform any terminal access method related to the target relay terminal provided by the embodiments of the present disclosure according to the obtained executable instructions. The processor 902 and the memory 903 may also be physically separated.

Specifically, the processor 902 is configured to read the computer program in the memory 903 and perform the following operations: acquiring first identification information used by a first remote terminal and a second remote terminal at a direct communication interface, where the first remote terminal and the second remote terminal are in end-to-end communication connection through the relay terminal; determining a mapping relationship between the first identification information and second identification information; and sending the mapping relationship to the first remote terminal and/or the second remote terminal; where the first identification information includes a source address and a target address used by the direct communication interface, or the first identification information includes the source address, the target address and a transmission type, and the number of bits of the second identification information is less than that of the first identification information.

In some optional implementations, the acquiring the first identification information used by the first remote terminal and the second remote terminal at the direct communication interface includes: receiving the first identification information sent by the first remote terminal and/or the second remote terminal; or acquiring, by a lower layer of the relay terminal, the first identification information from an upper layer of the relay terminal.

In some optional implementations, the receiving the first identification information sent by the first remote terminal and/or the second remote terminal includes: receiving the first identification information sent by the first remote terminal through a first PC5-RRC signaling; and/or receiving the first identification information sent by the second remote terminal through a second PC5-RRC signaling.

In some optional implementations, the acquiring, by the lower layer of the relay terminal, the first identification information from the upper layer of the relay terminal includes: acquiring, by the upper layer of the relay terminal, the first identification information through a PC5-S signaling process, and sending first indication information carrying the first identification information to the lower layer of the relay terminal, so that the lower layer of the relay terminal acquires the first identification information through the first indication information.

In some optional implementations, the determining the mapping relationship between the first identification information and the second identification information includes: receiving second indication information sent by the first remote terminal and/or the second remote terminal, and determining the mapping relationship between the first identification information and the second identification information according to the second indication information; or determining the mapping relationship between the first identification information and the second identification information according to the first identification information and currently available second identification information of the relay terminal.

In some optional implementations, the determining the mapping relationship between the first identification information and the second identification information according to the first identification information and the currently available second identification information of the relay terminal includes: determining currently unoccupied candidate second identification information as the currently available second identification information of the relay terminal; and for the first identification information, selecting the second identification information from the currently available second identification information of the relay terminal; and determining the mapping relationship between the first identification information and the second identification information according to the second identification information.

In some optional implementations, the sending the mapping relationship between the first identification information and the second identification information to the first remote terminal and/or the second remote terminal includes: sending the mapping relationship to the first remote terminal through a first PC5-RRC signaling between the relay terminal and the first remote terminal; and/or sending the mapping relationship to the second remote terminal through a second PC5-RRC signaling between the relay terminal and the second remote terminal.

In some optional implementations, when the relay terminal performs data transmission with the first remote terminal through the direct communication interface, the second identification information is carried in a PDU header of an adaptation layer; and/or when the relay terminal performs data transmission with the second remote terminal through the direct communication interface, the second identification information is carried in the PDU header of the adaptation layer.

In some optional implementations, the PDU header of the adaptation layer further includes at least one of the following: bearer identification information through an end-to-end direct communication interface between the first remote terminal and the second remote terminal; or a logical channel identification LCID through the end-to-end direct communication interface between the first remote terminal and the second remote terminal.

It should be noted here that the relay terminal provided by this disclosure can realize all the method steps realized by the relay terminal side in the above method embodiment, and can achieve the same technical effects, therefore, same parts as those in the method embodiments and beneficial effects in this embodiment are not repeated herein.

FIG. 10 is a second structural diagram of a remote terminal provided by an embodiment of the present disclosure. As shown in FIG. 10, the remote terminal is a first remote terminal or a second remote terminal, and the first remote terminal and the second remote terminal are in end-to-end communication connection through a relay terminal. The remote terminal includes a transceiver 1001, a processor 1002 and a memory 1003.

The memory 1003 is configured to store a computer program.

The transceiver 1001 is configured to receive and send data under control of a processor 1002.

In FIG. 10, the bus architecture can include any number of interconnected buses and bridges. Specifically, one or more processors represented by the processor 1002 and various circuits of a memory represented by the memory 1003 are linked together. The bus architecture can also link various other circuits, such as peripheral devices, voltage regulators and power management circuits, which are well known in the technical filed, and will not be further described here. The bus interface provides the interface. The transceiver 1001 can be a plurality of elements, that is, it includes a transmitter and a receiver, and provides a unit for communicating with various other devices on a transmission media, such as wireless channels, wired channels, optical cables and the like. The processor 1002 is responsible for managing the bus architecture and general processing, and the memory 1003 can store data used by the processor 1002 when performing operations.

The processor 1002 is responsible for managing the bus architecture and general processing, and the memory 1003 can store data used by the processor 1002 when performing operations. Optionally, the processor 1002 may be a central processing unit (central processing unit, CPU), an application specific integrated circuit (application specific integrated circuit, ASIC), a Field-Programmable Gate Array (Field-Programmable Gate Array, FPGA), or complex programmable logic device (complex programmable logic device, CPLD), and the processor can also adopt a multi-core architecture.

By calling the computer program stored in the memory 1003, the processor 1002 is configured to perform any terminal access method related to the target relay terminal provided by the embodiments of the present disclosure according to the obtained executable instructions. The processor 1002 and the memory 1003 may also be physically separated.

Specifically, the processor 1002 is configured to read the computer program in the memory 1003 and perform the following operations: acquiring a mapping relationship between first identification information and second identification information; determining a PDU header format of an adaptation layer according to the mapping relationship; where the first identification information includes a source address and a target address used by a direct communication interface, or the first identification information includes the source address, the target address and a transmission type, and the number of bits of the second identification information is less than that of the first identification information.

In some optional implementations, the acquiring the mapping relationship between the first identification information and the second identification information includes: receiving the mapping relationship sent by the relay terminal; or determining the mapping relationship according to the first identification information and the second identification information.

In some optional implementations, the receiving the mapping relationship sent by the relay terminal includes: acquiring the first identification information; and sending second indication information and the first identification information to the relay terminal through a first PC5-RRC signaling between the first remote terminal and the relay terminal, and receiving the mapping relationship sent by the relay terminal through the first PC5-RRC signaling; and/or sending the second indication information and the first identification information to the relay terminal through a second PC5-RRC signaling between the second remote terminal and the relay terminal, and receiving the mapping relationship sent by the relay terminal through the second PC5-RRC signaling.

In some optional implementations, the determining the mapping relationship according to the first identification information and the second identification information includes: acquiring the first identification information; determining currently unoccupied candidate second identification information as currently available second identification information of the relay terminal; for the first identification information, selecting the second identification information from the currently available second identification information of the relay terminal; and determining the mapping relationship between the first identification information and the second identification information according to the second identification information.

In some optional implementations, the acquiring the first identification information includes: acquiring, by an upper layer of the first remote terminal, the first identification information through a PC5-S signaling process, and sending third indication information carrying the first identification information to a lower layer of the first remote terminal, so that the lower layer of the first remote terminal acquires the first identification information through the third indication information; or acquiring the first identification information through an end-to-end PC5-RRC signaling interaction process performed by the lower layer of the first remote terminal.

In some optional implementations, the processor is further configured to perform at least one of the following operations: sending, by the first remote terminal, the mapping relationship to the relay terminal through a first PC5-RRC signaling; or sending, by the second remote terminal, the mapping relationship to the relay terminal through a second PC5-RRC signaling; or sending, by the first remote terminal, the mapping relationship to the second remote terminal through an end-to-end third PC5-RRC signaling between the first remote terminal and the second remote terminal; or sending, by the second remote terminal, the mapping relationship to the first remote terminal through the third PC5-RRC signaling.

In some optional implementations, when the first remote terminal and the second remote terminal perform data transmission through the direct communication interface, the second identification information is carried in a PDU header of an adaptation layer; and/or when the remote terminal performs data transmission with the relay terminal through the direct communication interface, the second identification information is carried in the PDU header of the adaptation layer.

In some optional implementations, the PDU header of the adaptation layer of the relay terminal includes the second indication information and at least one of the following: bearer identification information through an end-to-end direct communication interface between the first remote terminal and the second remote terminal; or a logical channel identification LCID through the end-to-end direct communication interface between the first remote terminal and the second remote terminal.

It should be noted here that the above-mentioned remote terminal provided by this disclosure can realize all the method steps realized by the first remote terminal or the second remote terminal in the above-mentioned method embodiment, and can achieve the same technical effect, therefore, same parts as those in the method embodiments and beneficial effects in this embodiment are not repeated herein.

It should be noted that the division of units in the embodiments of this disclosure is schematic, which is only a logical function division, and there may be another division manners in actual implementation. In addition, each functional unit in each embodiment of the present disclosure may be integrated into one processing unit, or each unit may exist physically alone, or two or more units may be integrated into one unit. The above integrated units can be realized in the form of hardware or software functional units.

If the above integrated units are realized in the form of software functional units and sold or used as independent products, they can be stored in a processor-readable storage medium. Based on this understanding, the technical solution of the present disclosure can be embodied in the form of software product in essence or in the part that has contributed to the prior art or in whole or in part of the technical solution, and the computer software product is stored in a storage medium and includes several instructions to make a computer device (which can be a personal computer, a server, a network device, etc.) or a processor (processor) execute all or part of the steps of the methods of various embodiments of the present disclosure. The aforementioned storage media include: U disk, mobile hard disk, Read-Only Memory (Read-Only Memory, ROM), Random Access Memory (Random Access Memory, RAM), magnetic disk or optical disk and other media that can store program codes.

On the relay terminal side, an embodiment of the present disclosure provides a processor-readable storage medium, and the processor-readable storage medium stores a computer program, which is used to enable the processor to realize all the method steps realized by the relay terminal in the above method embodiments, and achieve the same technical effect, therefore, same parts as those in the method embodiments and beneficial effects in this embodiment are not repeated herein.

On the terminal side, an embodiment of the present disclosure provides a processor-readable storage medium, and the processor-readable storage medium stores a computer program, which is used to enable the processor to realize all the method steps realized by the remote terminal side in the above-mentioned method embodiments, and can achieve the same technical effect, therefore, same parts as those in the method embodiments and beneficial effects in this embodiment are not repeated herein. The processor-readable storage medium can be any available medium or data storage device that the processor can access, including but not limited to magnetic memory (such as floppy disk, hard disk, magnetic tape, magneto-optical disk (MO), etc.), optical memory (such as CD, DVD, BD, HVD, etc.), and semiconductor memory (such as ROM, EPROM, EEPROM, non-volatile memory (NAND FLASH), solid state disk (SSD), and so on.

On the relay terminal side, an embodiment of the present disclosure also provides a computer program product containing instructions. A computer program is stored in a storage medium, and at least one processor can read the computer program from the storage medium. When the computer program is executed by at least one processor, all the method steps realized by the relay terminal in the above method embodiments can be realized, and the same technical effects can be achieved. Therefore, same parts as those in the method embodiments and beneficial effects in this embodiment are not repeated herein.

On the remote terminal side, an embodiment of the present disclosure also provides a computer program product containing instructions. A computer program is stored in a storage medium, and at least one processor can read the computer program from the storage medium. When at least one processor executes the computer program, all the method steps realized by the remote terminal in the above method embodiments can be realized, and the same technical effects can be achieved. Therefore, same parts as those in the method embodiments and beneficial effects in this embodiment are not repeated herein.

An embodiment of the present disclosure also provides a communication system, which includes a relay terminal, a first remote terminal and a second remote terminal. The relay terminal can perform all the method steps performed by the relay terminal side in the above method embodiments, and can achieve the same technical effect. The first remote terminal and the second remote terminal can perform all the method steps performed by the remote terminal side in the above method embodiments, and can achieve the same technical effect. Therefore, same parts as those in the method embodiments and beneficial effects in this embodiment are not repeated herein.

It should be understood by those skilled in the art that embodiments of the present disclosure may be provided as a method, a system, or a computer program product. Therefore, the present disclosure can take the form of an entirely hardware embodiment, an entirely software embodiment, or an embodiment combining software and hardware aspects. Moreover, the present disclosure may take the form of a computer program product implemented on one or more computer usable storage media (including but not limited to magnetic disk storage and optical storage, etc.) containing computer usable program codes therein.

The present disclosure is described with reference to schematic and/or block diagrams of signaling interaction of methods, devices, and computer program products according to embodiments of the present disclosure. It should be understood that each flow and/or block in the signaling interaction diagram and/or block diagram, and the combination of the flow and/or block in the signaling interaction diagram and/or block diagram can be realized by computer-executable instructions. These computer-executable instructions may be provided to a processor of a general-purpose computer, a special-purpose computer, an embedded processor or other programmable data processing apparatus to produce a machine, such that the instructions executed by the processor of the computer or other programmable data processing apparatus produce means for implementing the functions specified in one or more flows of the signaling interaction diagram and/or one or more blocks of the block diagram.

These processor-executable instructions may also be stored in a processor-readable memory that can direct a computer or other programmable data processing apparatus to operate in a specific manner, such that the instructions stored in the processor-readable memory produce an article of manufacture including instruction means that implement the functions specified in one or more flows of the signaling interaction diagram and/or one or more blocks of the block diagram.

These processor-executable instructions can also be loaded onto a computer or other programmable data processing device, so that a series of operational steps are performed on the computer or other programmable device to produce computer-implemented processes, so that the instructions executed on the computer or other programmable device provide steps for implementing the functions specified in one or more flows of the signaling interaction diagram and/or one or more blocks of the block diagram.

Obviously, those skilled in the art can make various modifications and variations to the present disclosure without departing from its spirit and scope. Thus, if these modifications and variations of the present disclosure are within the scope of the claims of the present disclosure and their equivalents, the present disclosure is also intended to include these modifications and variations.

## Claims

1. An information processing method, applied to a relay terminal, wherein the information processing method comprises:
acquiring first identification information used by a first remote terminal and a second remote terminal at a direct communication interface, wherein the first remote terminal and the second remote terminal are in end-to-end communication connection through the relay terminal;
determining a mapping relationship between the first identification information and second identification information; and
sending the mapping relationship to the first remote terminal and/or the second remote terminal; wherein the first identification information comprises a source address and a target address used by the direct communication interface, or the first identification information comprises the source address, the target address and a transmission type, and a number of bits of the second identification information is less than that of the first identification information.

2. The information processing method according to claim 1, wherein the acquiring the first identification information used by the first remote terminal and the second remote terminal at the direct communication interface comprises: receiving the first identification information sent by the first remote terminal and/or the second remote terminal; or acquiring, by a lower layer of the relay terminal, the first identification information from an upper layer of the relay terminal.

3. The information processing method according to claim 2, wherein the receiving the first identification information sent by the first remote terminal and/or the second remote terminal comprises: receiving the first identification information sent by the first remote terminal through a first direct communication interface radio resource control PC5-RRC signaling; and/or receiving the first identification information sent by the second remote terminal through a second PC5-RRC signaling.

4. The information processing method according to claim 2, wherein the acquiring, by the lower layer of the relay terminal, the first identification information from the upper layer of the relay terminal comprises: acquiring, by the upper layer of the relay terminal, the first identification information through a PC5-S signaling process, and sending first indication information carrying the first identification information to the lower layer of the relay terminal, so that the lower layer of the relay terminal acquires the first identification information through the first indication information.

5. The information processing method according to claim 1, wherein the determining the corresponding relationship between the first identification information and the second identification information comprises: receiving second indication information sent by the first remote terminal and/or the second remote terminal, and determining the mapping relationship between the first identification information and the second identification information according to the second indication information; or determining the mapping relationship between the first identification information and the second identification information according to the first identification information and currently available second identification information.

6. The information processing method according to claim 5, wherein the determining the mapping relationship between the first identification information and the second identification information according to the first identification information and the currently available second identification information comprises: determining currently unoccupied candidate second identification information as the currently available second identification information; and for the first identification information, selecting the second identification information from the currently available second identification information; and determining the mapping relationship between the first identification information and the second identification information according to the second identification information.

7. The information processing method according to any one of claims 1-6, wherein the sending the mapping relationship between the first identification information and the second identification information to the first remote terminal and/or the second remote terminal comprises: sending the mapping relationship to the first remote terminal through a first PC5-RRC signaling between the relay terminal and the first remote terminal; and/or sending the mapping relationship to the second remote terminal through a second PC5-RRC signaling between the relay terminal and the second remote terminal.

8. The information processing method according to any one of claims 1-6, wherein when the relay terminal performs data transmission with the first remote terminal through the direct communication interface, the second identification information is carried in a protocol unit PDU header of an adaptation layer; and/or when the relay terminal performs data transmission with the second remote terminal through the direct communication interface, the second identification information is carried in the PDU header of the adaptation layer.

9. The information processing method according to claim 8, wherein the PDU header of the adaptation layer further comprises at least one of the following: bearer identification information of an end-to-end direct communication interface between the first remote terminal and the second remote terminal; or a logical channel identification LCID of the end-to-end direct communication interface between the first remote terminal and the second remote terminal.

10. An information processing method, applied to a first remote terminal or a second remote terminal, wherein the first remote terminal is in end-to-end communication connection with the second remote terminal through a relay terminal, the information processing method comprises:
acquiring a mapping relationship between first identification information and second identification information; determining a PDU header format of an adaptation layer according to the mapping relationship; wherein the first identification information comprises a source address and a target address used by a direct communication interface, or the first identification information comprises the source address, the target address and a transmission type, and the number of bits of the second identification information is less than that of the first identification information.

11. The information processing method according to claim 10, wherein the acquiring the mapping relationship between the first identification information and the second identification information comprises: receiving the mapping relationship sent by the relay terminal; or determining the mapping relationship according to the first identification information and the second identification information.

12. The information processing method according to claim 11, wherein the receiving the mapping relationship sent by the relay terminal comprises: acquiring the first identification information;
sending second indication information and the first identification information to the relay terminal through a first PC5-RRC signaling between the first remote terminal and the relay terminal, and receiving the mapping relationship sent by the relay terminal through the first PC5-RRC signaling;
and/or sending the second indication information and the first identification information to the relay terminal through a second PC5-RRC signaling between the second remote terminal and the relay terminal, and receiving the mapping relationship sent by the relay terminal through the second PC5-RRC signaling.

13. The information processing method according to claim 11, wherein the determining the mapping relationship according to the first identification information and the second identification information comprises: acquiring the first identification information; and
determining currently unoccupied candidate second identification information as currently available second identification information; and for the first identification information, selecting the second identification information from the currently available second identification information; determining the mapping relationship between the first identification information and the second identification information the second identification information.

14. The information processing method according to claim 12 or 13, wherein the acquiring the first identification information comprises:
acquiring, by an upper layer of the first remote terminal, the first identification information through a PC5-S signaling process, and sending third indication information carrying the first identification information to a lower layer of the first remote terminal, so that the lower layer of the first remote terminal acquires the first identification information through the third indication information; or acquiring the first identification information through an end-to-end PC5-RRC signaling interaction process performed by the lower layer of the first remote terminal.

15. The information processing method according to claim 13, further comprising at least one of the following operations:
sending, by the first remote terminal, the mapping relationship to the relay terminal through a first PC5-RRC signaling; or sending, by the second remote terminal, the mapping relationship to the relay terminal through a second PC5-RRC signaling; or sending, by the first remote terminal, the mapping relationship to the second remote terminal through an end-to-end third PC5-RRC signaling between the first remote terminal and the second remote terminal; or sending, by the second remote terminal, the mapping relationship to the first remote terminal through the third PC5-RRC signaling.

16. The information processing method according to any one of claims 10-15, wherein when the first remote terminal and the second remote terminal perform data transmission through the direct communication interface, the second identification information is carried in a protocol unit PDU header of an adaptation layer; and/or when the remote terminal performs data transmission with the relay terminal through the direct communication interface, the second identification information is carried in the PDU header of the adaptation layer.

17. The information processing method according to claim 16, wherein the PDU header of the adaptation layer further comprises at least one of the following: bearer identification information of an end-to-end direct communication interface between the first remote terminal and the second remote terminal; or a logical channel identification LCID of the end-to-end direct communication interface between the first remote terminal and the second remote terminal.

18. A relay terminal, comprising: an acquisition module, configured to acquire first identification information used by a first remote terminal and a second remote terminal at a direct communication interface, wherein the first remote terminal and the second remote terminal are in end-to-end communication connection through the relay terminal; a determining module, configured to determine a mapping relationship between the first identification information and second identification information; and a sending module, configured to send the mapping relationship to the first remote terminal and/or the second remote terminal;
wherein the first identification information comprises a source address and a target address used by the direct communication interface, or the first identification information comprises the source address, the target address and a transmission type, and the number of bits of the second identification information is less than that of the first identification information.

19. The relay terminal according to claim 18, wherein the acquisition module is specifically configured to: receive the first identification information sent by the first remote terminal and/or the second remote terminal; or acquire, by a lower layer of the relay terminal, the first identification information from an upper layer of the relay terminal.

20. The relay terminal according to claim 18, wherein the acquisition module is specifically configured to: receive second indication information sent by the first remote terminal and/or the second remote terminal, and determine the mapping relationship between the first identification information and the second identification information according to the second indication information; or determine the mapping relationship between the first identification information and the second identification information according to the first identification information and currently available second identification information of the relay terminal.

21. A remote terminal, wherein the remote terminal is a first remote terminal or a second remote terminal, and the first remote terminal and the second remote terminal are in end-to-end communication connection through a relay terminal, the remote terminal comprises:
an acquisition module, configured to acquire a mapping relationship between first identification information and second identification information; and a determining module, configured to determine a PDU header format of an adaptation layer according to the mapping relationship; wherein the first identification information comprises a source address and a target address used by a direct communication interface, or the first identification information comprises the source address, the target address and a transmission type, and the number of bits of the second identification information is less than that of the first identification information.

22. The remote terminal according to claim 21, wherein the acquisition module is specifically configured to: acquire the first identification information; determine the currently unoccupied candidate second identification information as currently available second identification information of the relay terminal; and for the first identification information, select the second identification information from the currently available second identification information of the relay terminal; and determine the mapping relationship between the first identification information and the second identification information according to the second identification information.

23. The remote terminal according to claim 22, wherein the remote terminal further comprises a sending module, configured for the first remote terminal to send the mapping relationship to the relay terminal through a first PC5-RRC signaling; or configured for the second remote terminal to send the mapping relationship to the relay terminal through a second PC5-RRC signaling; or configured for the first remote terminal to send the mapping relationship to the second remote terminal through an end-to-end third PC5-RRC signaling between the first remote terminal and the second remote terminal; or configured for the second remote terminal to send the mapping relationship to the first remote terminal through the third PC5-RRC signaling.

24. A relay terminal, comprising:
a memory, configured to store a computer program;
a transceiver, configured to receive and send data under control of a processor;
the processor, configured to read the computer program in the memory and perform the following operations: acquiring first identification information used by a first remote terminal and a second remote terminal at a direct communication interface, wherein the first remote terminal and the second remote terminal are in end-to-end communication connection through the relay terminal; determining a mapping relationship between the first identification information and second identification information; and sending the mapping relationship to the first remote terminal and/or the second remote terminal; wherein the first identification information comprises a source address and a target address used by the direct communication interface, or the first identification information comprises the source address, the target address and a transmission type, and the number of bits of the second identification information is less than that of the first identification information.

25. The relay terminal according to claim 24, wherein the acquiring the first identification information used by the first remote terminal and the second remote terminal at the direct communication interface comprises: receiving the first identification information sent by the first remote terminal and/or the second remote terminal; or acquiring, by a lower layer of the relay terminal, the first identification information from an upper layer of the relay terminal.

26. The relay terminal according to claim 25, wherein the receiving the first identification information sent by the first remote terminal and/or the second remote terminal comprises: receiving the first identification information sent by the first remote terminal through a first PC5-RRC signaling; and/or receiving the first identification information sent by the second remote terminal through a second PC5-RRC signaling.

27. The relay terminal according to claim 25, wherein the acquiring, by the lower layer of the relay terminal, the first identification information from the upper layer of the relay terminal comprises: acquiring, by the upper layer of the relay terminal, the first identification information through a PC5-S signaling process, and sending first indication information carrying the first identification information to the lower layer of the relay terminal, so that the lower layer of the relay terminal acquires the first identification information through the first indication information.

28. The relay terminal according to claim 24, wherein the determining the mapping relationship between the first identification information and the second identification information comprises: receiving second indication information sent by the first remote terminal and/or the second remote terminal, and determining the mapping relationship between the first identification information and the second identification information according to the second indication information; or determining the mapping relationship between the first identification information and the second identification information according to the first identification information and currently available second identification information.

29. The relay terminal according to claim 28, wherein the determining the mapping relationship between the first identification information and the second identification information according to the first identification information and the currently available second identification information comprises: determining currently unoccupied candidate second identification information as the currently available second identification information; and for the first identification information, selecting the second identification information from the currently available second identification information; and determining the mapping relationship between the first identification information and the second identification information according to the second identification information.

30. The relay terminal according to any one of claims 24-29, wherein the sending the mapping relationship between the first identification information and the second identification information to the first remote terminal and/or the second remote terminal comprises: sending the mapping relationship to the first remote terminal through a first PC5-RRC signaling between the relay terminal and the first remote terminal; and/or sending the mapping relationship to the second remote terminal through a second PC5-RRC signaling between the relay terminal and the second remote terminal.

31. The relay terminal according to any one of claims 24-29, wherein when the relay terminal performs data transmission with the first remote terminal through the direct communication interface, the second identification information is carried in a protocol unit PDU header of an adaptation layer; and/or when the relay terminal performs data transmission with the second remote terminal through the direct communication interface, the second identification information is carried in the PDU header of the adaptation layer.

32. The relay terminal according to claim 31, wherein the PDU header of the adaptation layer further comprises at least one of the following: bearer identification information of an end-to-end direct communication interface between the first remote terminal and the second remote terminal; or a logical channel identification LCID of the end-to-end direct communication interface between the first remote terminal and the second remote terminal.

33. A remote terminal, wherein the remote terminal is a first remote terminal or a second remote terminal, and the first remote terminal is in end-to-end communication connection with the second remote terminal through a relay terminal, the remote terminal comprises:
a memory, configured to store a computer program;
a transceiver, configured to receive and send data under control of a processor;
the processor, configured to read the computer program in the memory and perform the following operations: acquiring a mapping relationship between first identification information and second identification information; determining a PDU header format of an adaptation layer according to the mapping relationship; wherein the first identification information comprises a source address and a target address used by a direct communication interface, or the first identification information comprises the source address, the target address and a transmission type, and the number of bits of the second identification information is less than that of the first identification information.

34. The remote terminal according to claim 33, wherein the acquiring the mapping relationship between the first identification information and the second identification information comprises: receiving the mapping relationship sent by the relay terminal; or determining the mapping relationship according to the first identification information and the second identification information.

35. The remote terminal according to claim 34, wherein the receiving the mapping relationship sent by the relay terminal comprises: acquiring the first identification information; and
sending second indication information and the first identification information to the relay terminal through a first PC5-RRC signaling between the first remote terminal and the relay terminal, and receiving the mapping relationship sent by the relay terminal through the first PC5-RRC signaling; and/or sending the second indication information and the first identification information to the relay terminal through a second PC5-RRC signaling between the second remote terminal and the relay terminal, and receiving the mapping relationship sent by the relay terminal through the second PC5-RRC signaling.

36. The remote terminal according to claim 33, wherein the determining the mapping relationship according to the first identification information and the second identification information comprises: acquiring the first identification information; determining currently unoccupied candidate second identification information as currently available second identification information; for the first identification information, selecting the second identification information from the currently available second identification information; and determining the mapping relationship between the first identification information and the second identification information according to the second identification information.

37. The remote terminal according to claim 35 or 36, wherein the acquiring the first identification information comprises:
acquiring, by an upper layer of the first remote terminal, the first identification information through a PC5-S signaling process, and sending third indication information carrying the first identification information to a lower layer of the first remote terminal, so that the lower layer of the first remote terminal acquires the first identification information through the third indication information; or acquiring the first identification information through an end-to-end PC5-RRC signaling interaction process performed by the lower layer of the first remote terminal.

38. The remote terminal of claim 35, wherein the processor is further configured to perform at least one of the following operations:
sending, by the first remote terminal, the mapping relationship to the relay terminal through a first PC5-RRC signaling; or sending, by the second remote terminal, the mapping relationship to the relay terminal through a second PC5-RRC signaling; or sending, by the first remote terminal, the mapping relationship to the second remote terminal through an end-to-end third PC5-RRC signaling between the first remote terminal and the second remote terminal; or sending, by the second remote terminal, the mapping relationship to the first remote terminal through the third PC5-RRC signaling.

39. The remote terminal according to any one of claims 33-38, wherein when the first remote terminal and the second remote terminal perform data transmission through the direct communication interface, the second identification information is carried in a protocol unit PDU header of an adaptation layer; and/or when the remote terminal performs data transmission with the relay terminal through the direct communication interface, the second identification information is carried in the PDU header of the adaptation layer.

40. The remote terminal according to claim 39, wherein the PDU header of the adaptation layer further comprises at least one of the following:
bearer identification information of an end-to-end direct communication interface between the first remote terminal and the second remote terminal; or a logical channel identification LCID of the end-to-end direct communication interface between the first remote terminal and the second remote terminal.

41. A processor-readable storage medium, wherein the processor-readable storage medium stores a computer program for causing a processor to execute the information processing method according to any one of claims 1 to 9, or execute the information processing method according to any one of claims 10 to 17.
